# EUROPEAN PATENT APPLICATION

(11) **EP 1 302 715 A2**
(43) Date of publication of application: **16.04.2003**
(21) Application number: 02022268.3
(22) Date of filing: 04.10.2002
(51) Int. Cl.: F16L 37/38, F16L 37/10, F16L 37/23

(54) **Quick connector with built-in flow control valve, particularly for connecting flexible hoses to gas distribution lines**

(30) Priority: 09.10.2001 IT MI20012087
(71) Applicant: Colombo, Renato, 28021 Borgomanero (Novara) (IT)
(72) Inventor: Colombo, Renato, 28021 Borgomanero (Novara) (IT)
(74) Representative: Modiano, Guido, Dr.-Ing.

(57) **Abstract**

A quick connector (1) with built-in flow control valve, particularly for connecting flexible hoses to gas distribution lines. The connector comprises a connector body (2) inside which there is a flow control chamber (3) that is connected to at least one inlet (4) and one outlet (5). The flow control chamber (3) accommodates a flow control element (6) that can rotate with respect to the connector body in order to pass from an open position to a closed position. An engagement seat (10) is formed at the inlet or outlet and is suitable to receive an end sleeve (11) of a hose (12) to be connected to the connector body. The connector is provided with an actuation knob (13) that can be actuated in order to produce the transfer of the flow control element (6) from the closed position to the open position and to lock the end sleeve (11) in the engagement seat (10) or to transfer the flow control element (6) from the open position to the closed position and to release the end sleeve (11) from the engagement seat (10).

## Description

The present invention relates to a quick connector with built-in flow control valve, particularly for connecting flexible hoses to gas distribution lines.

The connector according to the invention is intended to be used preferably to connect flexible hoses for supplying user devices, particularly domestic ones, to the distribution system for gas, such as for example methane and other gases, for heating or other applications.

Quick connectors with built-in flow control valve for connecting hoses to gas distribution lines are known.

One of these connectors comprises a connector body that is composed of two arms that are substantially mutually perpendicular and have respectively an inlet meant to be connected to the gas distribution system and an outlet meant to be connected to the user device, usually by means of a flexible hose.

In the arm provided with the outlet there is a chamber that accommodates a flow control element, which can rotate about the axis of the arm in order to establish or interrupt the connection between the inlet and the outlet.

A seat is formed in the end of the flow control element that is directed toward the outlet and is meant to receive the connecting hose, which is provided with a suitable connection device for coupling to the seat and for actuating the flow control element.

The connection device is generally constituted by a sleeve, which accommodates a tubular coupling element that is connected, with one of its ends, to the flexible hose that protrudes from an axial end of the sleeve.

The other end of the coupling element protrudes from the opposite axial end of the sleeve and is meant to be inserted in the outlet of the connector.

A cylindrical tubular portion is fixed to the sleeve coaxially around said end of the coupling element and is meant to be coupled to said seat formed in the flow control element of the connector.

The free end of the cylindrical tubular portion has one or more axial notches, which are meant to be engaged by pins that protrude radially within the seat of the flow control element when said cylindrical tubular portion is inserted in the seat so as to rigidly couple the flow control element to the sleeve in rotating about its axis.

Furthermore, on the lateral surface of the cylindrical tubular portion there is a seat for a locking element, usually a ball, which protrudes retractably from the lateral surface of the seat formed in the flow control element. The retraction of the ball can be blocked by turning the flow control element.

In practice, by inserting the end of the coupling element and the tubular portion that surrounds it in the seat formed in the flow control element, the flow control element is rigidly coupled to the sleeve in the rotation about its axis. By rotating the sleeve about its own axis with respect to the connector body, the flow control element is turned and simultaneously actuates the opening of the valve that is built into the connector and the locking of the ball that keeps the sleeve stably anchored to the connector. In order to disengage the sleeve from the connector, it is necessary to rotate it in the opposite direction, actuating the closure of the valve on the part of the flow control element.

The rotation of the sleeve to produce its connection or disengagement with respect to the connector does not affect the connecting element, since said connecting element is connected to the sleeve so that it can rotate about its own axis.

Connectors of this type have the drawback that they are difficult to use, particularly during the connection of the connecting hose, since they require to simultaneously push and turn the sleeve connected to the connecting hose.

Furthermore, these connectors require a rather complicated execution of the connecting hose, since said hose must be provided with the rotatable sleeve and with the cylindrical tubular portion with notches for actuating the flow control element.

Quick connectors are also known which have a built-in flow control valve provided with a flow control element that performs a translational motion and is moved from the closed position to the open position following the insertion of the connecting hose. The opening movement of the flow control element is contrasted by a spring that returns the flow control element to the closed position when the connecting hose is disconnected.

These kinds of connector have the problem that they do not offer adequate safety assurances as regards the closure of the valve. In the presence of dirt and foreign objects between the flow control element and the corresponding seat, the closure of the valve can in fact be defective.

Furthermore, in these kinds of connector the flow control element is exposed to possible tampering that might lead to the accidental opening of the valve.

The aim of the present invention is to solve the problems described above by providing a quick connector with built-in flow control valve, particularly for connecting flexible hoses to gas distribution lines, which offers adequate assurances of safety and is extremely easy to use.

Within this aim, an object of the invention is to provide a connector that allows to simplify structurally the connecting hose to which it is connected.

Another object of the invention is to provide a connector that can be manufactured with competitive costs.

This aim and these and other objects that will become better apparent hereinafter are achieved by a quick connector with built-in flow control valve, particularly for connecting flexible hoses to gas distribution lines, comprising a connector body inside which there is a flow control chamber that is connected to at least one inlet and one outlet, said flow control chamber accommodating a flow control element that can rotate with respect to said connector body in order to pass from an open position, in which it allows the connection of said inlet to said outlet, to a closed position, in which it interrupts the connection of said inlet to said outlet, and vice versa; an engagement seat being formed at said inlet or outlet, in said connector body, and being suitable to receive an end sleeve of a hose to be connected to said connector body, characterized in that it comprises an actuation knob that is associated with said connector body and is connected to said flow control element and to means for locking said end sleeve inserted in said engagement seat, said knob being actuatable in order to produce the transfer of said flow control element from said closed position to said open position and to activate said locking means or produce the transfer of said flow control element from said open position to said closed position and to deactivate said locking means.

Further characteristics and advantages of the invention will become better apparent from the description of a preferred but not exclusive embodiment of the connector according to the invention, illustrated only'by way of non-limitative example in the accompanying drawings, wherein:

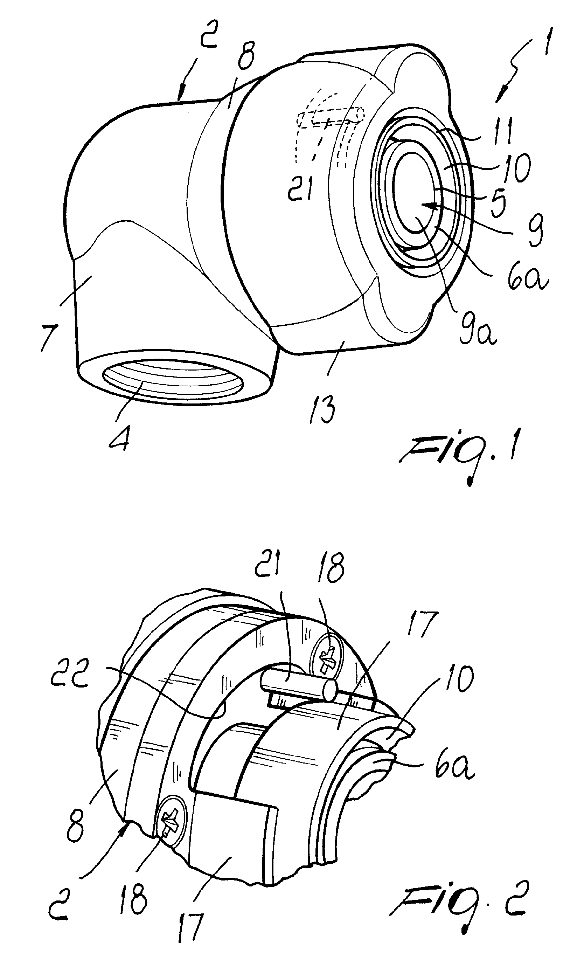

Figure 1 is a perspective view of the connector according to the invention;

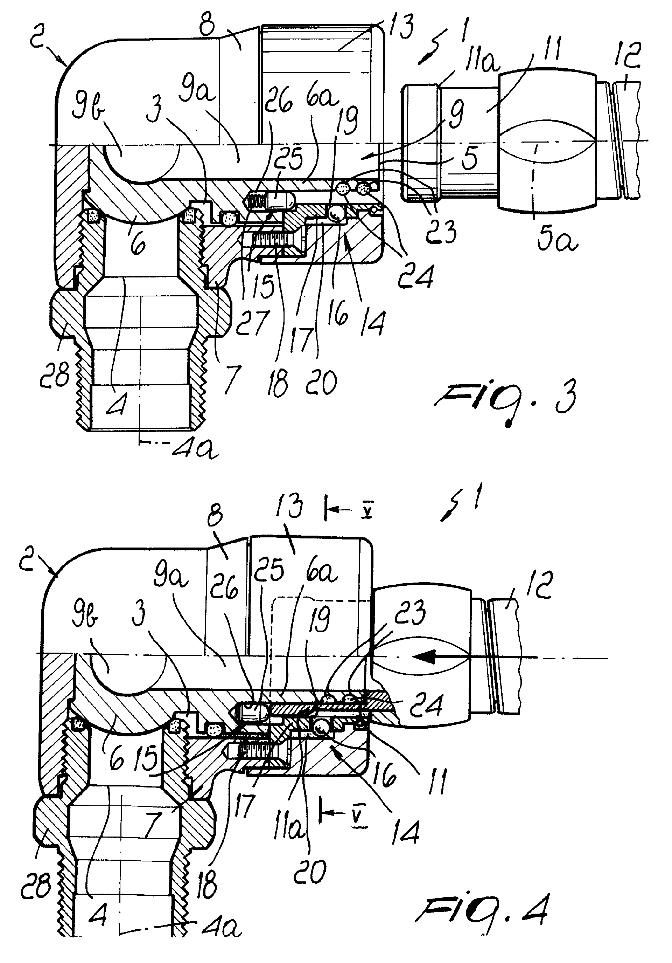

Figure 2 is a perspective view of the connector according to the invention, with the knob removed;
Figure 3 is a partially sectional view of the connector according to the invention, with a facing end sleeve of a flexible hose to be connected to the connector;
Figure 4 is a partially sectional view of the connector with the end sleeve inserted in the engagement seat;
Figure 5 is a sectional view of Figure 4, taken along the line V-V;
Figure 6 is a partially sectional view of the connector, with the end sleeve inserted and locked in the engagement seat;
Figure 7 is a sectional view of Figure 6, taken along the line VII-VII.

With reference to the figures, the connector according to the invention, generally designated by the reference numeral 1, comprises a connector body 2 in which there is a flow control chamber 3 that is connected to an inlet 4 and to an outlet 5 and accommodates a flow control element 6.

The connector body 2 is composed of a first arm 7 and a second arm 8, which are substantially mutually perpendicular. The inlet 4 is formed at the free end of the first arm 7, while the outlet 5 is formed at the free end of the second arm 8. The inlet 4 and the outlet 5 are preferably arranged so that their axes 4a and 5a are mutually perpendicular.

The flow control element 6 is accommodated in the flow control chamber 3 at the region where the arms 7 and 8 are joined.

The flow control element 6 is preferably of the ball type and can rotate with respect to the connector body 2 about an axis that conveniently coincides with the axis 5a.

The flow control element 6 is crossed by a passage 9, which is composed of two mutually perpendicular arms, respectively a first arm 9a, whose axis coincides with the axis 5a, i.e., with the rotation axis of the flow control element 6, and a second arm 9b, which by way of the rotation of the flow control element 6 can be aligned with the axis 4a or can be placed substantially at right angles to the axis 4a.

The flow control element 6 can rotate with respect to the connector body 2 about the axis 5a in order to pass from an open position, in which the arm 9b of the passage 9 is aligned with the axis 4a so as to provide the connection between the inlet 4 and the outlet 5, to a closed position, in which the arm 9b is arranged substantially at right angles to the inlet 4 and the flow control element 6 interrupts the connection of the inlet 4 to the outlet 5 and vice versa.

At the outlet 5, in the connector body 2 there is an engagement seat 10 that is suitable to receive an end sleeve 11 of a duct 12, preferably a flexible hose, to be connected to the connector body 2.

According to the invention, the connector 1 comprises an actuation knob 13, which is associated with the connector body 2 and is connected to the flow control element 6 and to locking means 14 for locking the end sleeve 11 inserted in the engagement seat 10.

The knob 13 can be operated so as to move the flow control element 6 from the closed position to the open position and activate the locking means 14, or so as to move the flow control element 6 from the open position to the closed position and deactivate the locking means 14.

Conveniently, the connector further comprises safety means 15, which actuate the locking of the knob 13 and therefore of the flow control element 6 if the end sleeve 11 is not present in the engagement seat 10.

The engagement seat 10 is preferably substantially cylindrical and coaxial to the outlet 5. The end sleeve 11 also is substantially cylindrical and can be inserted coaxially in the engagement seat 10.

The knob 13 is arranged around the engagement seat 10 and can rotate about the axis 5a of the engagement seat 10 with respect to the connector body 2.

The locking means 14 comprise at least one locking element 16, which is preferably constituted by a ball and is supported by the body of the connector at a portion of the lateral surface of the engagement seat 10.

The locking element 16 can move along a radial direction with respect to the engagement seat 10 in order to pass from a locking position, in which it protrudes from the lateral surface of the engagement seat 10 to form a stop element that can be engaged by an axial shoulder 11a provided on the outer lateral surface of the end sleeve 11 inserted in the engagement seat 10, to an inactive position, in which it does not protrude, or protrudes to a lesser extent, from the lateral surface of the engagement seat 10 with respect to the locking position, in order to allow the axial sliding of the end sleeve 11 along the engagement seat 10.

More particularly, the engagement seat 10 is formed by a hollow cylindrical portion 17 of the connecting body 2, which can be provided separately from the remaining part of the connecting body 2 and is fixed rigidly thereto for example by means of screws 18.

The locking element 16 is accommodated in a radial passage 19 that passes radially through the lateral wall of the portion 17.

The knob 13 is arranged around the portion 17 and has, on its surface directed toward the outer cylindrical surface of the portion 17, a recess 20 that can be arranged, by way of the rotation of the knob 13 with respect to the portion 17, at the locking element 16, whose radial dimensions are greater than the thickness of the wall in which it is accommodated, in order to allow its passage from the locking position to the inactive position, or can be offset angularly with respect to the locking element 16 in order to move the locking element 16 from the inactive position to the locking position.

The knob 13 is rigidly coupled to the flow control element 6 in rotating about the axis 5a with respect to the connector body 2 by way of a pin 21 that is parallel and spaced with respect to the axis 5a and' passes through an opening 22 formed in the portion 17. The opening 22 lies along a circular arc centered on the axis 5a in order to delimit the rotation angle of the knob 13 and of the flow control element 6 with respect to the connector body 2.

Conveniently, the rotation angle α of the knob 13 about the axis 5a to transfer the flow control element 6 from the fully open position to the fully closed position is smaller than the rotation angle β of the knob 13 about the same axis 5a that is required to obtain, starting from the fully open position of the flow control element 6, the alignment of the recess 20 with the locking element 16.

In this manner it is possible to move the flow control element 16 from the open position to the closed position and vice versa without releasing the sleeve 11 from the engagement seat 10, since to do so it is necessary to rotate the knob 13 further after the flow control element 6 has reached the closed position.

The flow control element 6 has a substantially cylindrical extension that lies coaxially in the engagement seat 10 and inside which the arm 9a of the passage 9 is formed.

At least one circumferential seat 23 is formed on the outer cylindrical surface of the extension 6a and accommodates a corresponding sealing gasket 24 that is meant to engage the inside of the end sleeve 11.

The safety means 15 comprise a pin 25 that is arranged in a seat 26 provided in the flow control element 6 proximate to the bottom of the engagement seat 10. The pin 25 can slide along the seat 26, parallel to the axis 5a, and is pushed by elastic means, constituted by a spring 27, so as to protrude into the engagement seat 10 in order to engage a portion of the connecting body 2 or rather of the portion 17 in the absence of the end sleeve 11 in the engagement seat 10.

For the sake of completeness in description, it should be noted that a nipple 28 can be mounted, if required, on the inlet 4.

The operation of the quick connector according to the invention is as follows.

When the knob 13 is arranged so that the recess 20 lies at the locking element 16, as shown in Figures 3, 4 and 5, the flow control element 6 lies beyond the closed position and in any case prevents any connection between the inlet 4 and the outlet 5. With the knob 13 in this position, the pin 25 prevents the rotation of the knob 13 and therefore makes it impossible to open the flow control valve built into the connector, as shown in Figure 3, until the end sleeve 11 is inserted correctly in the engagement seat 10.

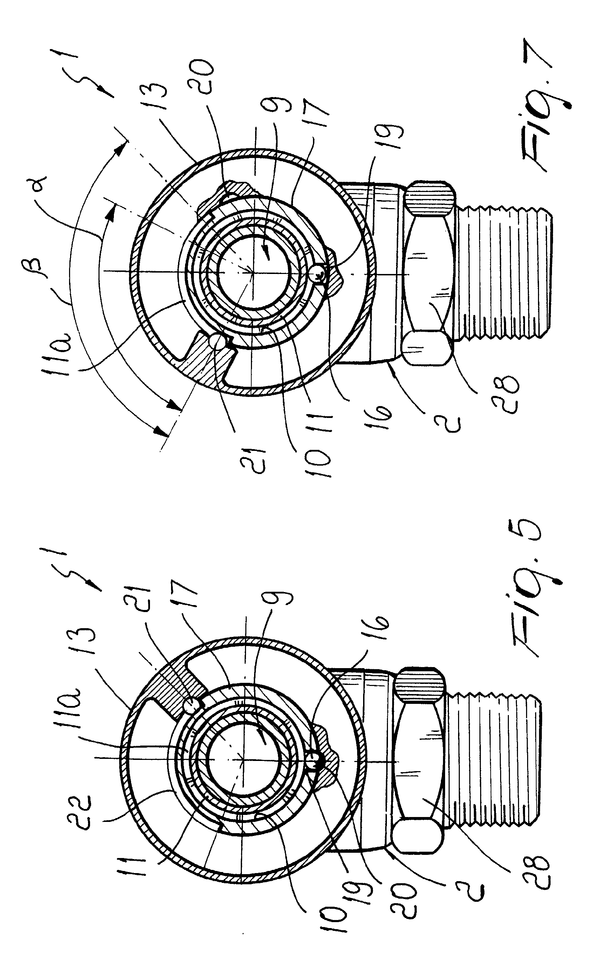

The full insertion of the end sleeve 11 in the engagement seat 10, as shown in particular in Figure 4, causes the disengagement of the pin 25 from the portion 17 in contrast with the action of the spring 27, allowing the rotation of the knob 13 and of the flow control element 6.

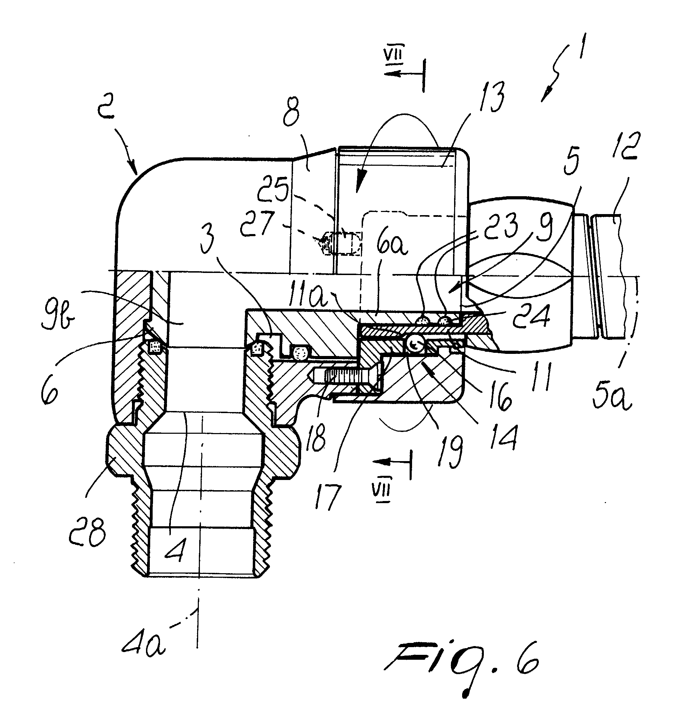

By rotating the knob 13, the recess 20 is offset with respect to the locking element 16, which is thus forced to protrude in the engagement seat 10, locking axially the end sleeve 11, as shown in Figures 6 and 7.

It should be noted that the rotation of the knob 13, in its initial portion, locks the end sleeve 11, but while rotating the flow control element 6 partially it does not change the closed condition of the valve.

By continuing the rotation of the knob 13 as far as allowed by the angular extent of the opening 22, the flow control element 6 is transferred from the closed position to the open position.

It should also be noted that by way of the rotation of the knob 13 it is possible to open and close the valve built into the connector, preventing the end sleeve 11 from disengaging from the engagement seat 10 because it is sufficient to limit the rotation of the knob 13 to the rotation angle α so that the recess 20 does not align itself with the locking element 16.

When instead one wishes to disengage the end sleeve 11 from the engagement seat 10, after placing the flow control element 6 in the closed position, it is sufficient to continue the rotation of the knob 13, completing the rotation angle β, to allow the recess 20 to reach the locking element 16.

In this manner, the end sleeve 11 can be extracted from the engagement seat 10, since the locking element 16 can retract into the radial passage 19.

The extraction of the end sleeve 11 releases the pin 25, which engages the portion 17 again, locking the flow control element 6 and the knob 13.

In practice it has been found that the quick connector according to the invention fully achieves the intended aim and objects, since the locking of the hose inserted in the connector and the opening and closing of the built-in valve are extremely easy and safe.

Another advantage of the connector according to the invention, which arises from the fact that the end sleeve arranged on the hose is not subjected to any rotation, is that it is possible to provide, if required, an elbow adjacent to the portion of the end sleeve that can be inserted in the engagement seat of the connector.

The connector thus conceived is susceptible of numerous modifications and variations, all of which are within the scope of the inventive concept; all the details may further be replaced with other technically equivalent elements.

In practice, the materials employed, so long as they are compatible with the specific use, as well as the dimensions, may be any according to requirements and to the state of the art.

The disclosures in Italian Patent Application No. MI2001A002087, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A quick connector with built-in flow control valve, particularly for connecting flexible hoses to gas distribution lines, comprising a connector body inside which there is a flow control chamber that is connected to at least one inlet and one outlet, said flow control chamber accommodating a flow control element that can rotate with respect to said connector body in order to pass from an open position, in which it allows the connection of said inlet to said outlet, to a closed position, in which it interrupts the connection of said inlet to said outlet, and vice versa; an engagement seat being formed at said inlet or outlet, in said connector body, and being suitable to receive an end sleeve of a hose to be connected to said connector body, **characterized in that** it comprises an actuation knob that is associated with said connector body and is connected to said flow control element and to means for locking said end sleeve inserted in said engagement seat, said knob being actuatable in order to produce the transfer of said flow control element from said closed position to said open position and to activate said locking means or produce the transfer of said flow control element from said open position to said closed position and to deactivate said locking means.

2. The connector according to claim 1, **characterized in that** it comprises safety means that lock said knob when said end sleeve is not in said engagement seat.

3. The connector according to claims 1 and 2, **characterized in that** said engagement seat is substantially cylindrical, said end sleeve having a substantially cylindrical shape that can be inserted coaxially in said engagement seat, said knob being arranged around said engagement seat and being rotatable about the axis of said engagement seat with respect to said connector body.

4. The connector according to one or more of the preceding claims, **characterized in that** said locking means comprise at least one locking element, which is supported by said connector body at a portion of the lateral surface of said engagement seat, said locking element being movable along a radial direction with respect to said engagement seat in order to pass from a locking position, in which it protrudes from the lateral surface of said engagement seat to form a stop element that can be engaged by an axial shoulder provided on the outer lateral surface of said end sleeve inserted in said engagement seat, to an inactive position, in which it does not protrude, or protrudes to a lesser extent, from the lateral surface of said engagement seat with respect to the locking position, in order to allow the axial sliding of said end sleeve along said engagement seat.

5. The connector according to one or more of the preceding claims, **characterized in that** said engagement seat is formed by a hollow cylindrical portion of said connector body, said locking element being accommodated in a radial passage that passes radially through the side wall of said hollow cylindrical portion, said knob being arranged around said hollow cylindrical portion and having, on its surface directed toward the outer cylindrical surface of said hollow cylindrical portion, a recess, which can be arranged, by way of the rotation of said knob with respect to said hollow cylindrical portion, at said locking element in order to allow its passage from said locking position to said inactive position, or can be offset angularly with respect to said locking element in order to produce the passage of said locking element from said inactive position to said locking position.

6. The connector according to one or more of the preceding claims, **characterized in that** said locking element is constituted by a ball.

7. The connector according to one or more of the preceding claims, **characterized in that** said flow control element is a ball-type flow control element that can rotate with respect to said connector body about the axis of said engagement seat in order to pass from said open position to said closed position.

8. The connector according to one or more of the preceding claims, **characterized in that** said knob is rigidly coupled to said flow control element in rotating about the axis of said engagement seat with respect to said connector body.

9. The connector according to one or more of the preceding claims, **characterized in that** said inlet and said outlet have axes that are substantially perpendicular to each other, said flow control element being crossed by a passage that is composed of two arms that are substantially mutually perpendicular, a first one of said two arms of the passage being coaxial to said engagement seat, said flow control element being rotatable about the axis of said engagement seat with respect to said connector body in order to pass from said open position, in which the second one of said two arms of the passage is coaxial to the other inlet or outlet, to said closed position, in which the second one of said two arms of the passage is angularly offset with respect to the other inlet or outlet, and vice versa.

10. The connector according to one or more of the preceding claims, **characterized in that** said flow control element has a substantially cylindrical extension in which there is the first one of said two arms of the passage, said extension protruding coaxially into said engagement seat.

11. The connector according to one or more of the preceding claims, **characterized in that** at least one circumferential seat is formed on the outer cylindrical surface of said extension of the flow control element and accommodates a sealing gasket that can engage the inside of said end sleeve.

12. The connector according to one or more of the preceding claims, **characterized in that** said safety means comprise a pin that is arranged on the bottom of said engagement seat and is supported by said flow control element, said pin being pushed by elastic means so as to engage a portion of said connector body when said end sleeve is not in said engagement seat.

13. The connector according to one or more of the preceding claims, **characterized in that** said knob is rigidly coupled to said flow control element in rotating about the axis of said engagement seat with respect to said connector body by way of a pin that passes through an opening formed in said hollow cylindrical portion of the connector body; said opening being shaped like a circular arc centered on the axis of said engagement seat in order to delimit the angle of possible rotation of said sleeve with respect to said connector body.

14. The connector according to one or more of the preceding claims, **characterized in that** the rotation angle of said knob about the axis of said engagement seat in passing from the fully open position to the fully closed position of the flow control element is smaller than the angle of rotation of said knob about the axis of said engagement seat in passing from the position in which the flow control element is fully open to the position in which said recess is aligned with said locking element.
